# EUROPEAN PATENT APPLICATION

(11) **EP 4 708 115 A1**
(43) Date of publication of application: **11.03.2026**
(21) Application number: 23935817.9
(22) Date of filing: 26.09.2023
(51) Int. Cl.: G06F 30/392, G06F 30/398, G06F 30/27, G06N 5/04, G06N 3/0464, G06N 3/08, G06F 111/04, G06F 117/12

(54) **GENERATOR ALLOCATION METHOD FOR SEMICONDUCTOR LAYOUT, ALLOCATION TRAINING METHOD, AND OPERATION DEVICE**

(30) Priority: 04.05.2023 KR 20230058398
(71) Applicant: POSTECH Research and Business Development Foundation, Pohang-si, Gyeongsangbuk-do 37673 (KR)
(72) Inventor: KIM, Byungsub, Pohang-si, Gyeongsangbuk-do 37673 (KR); JEONG, Sungyu, Pohang-si, Gyeongsangbuk-do 37673 (KR)
(74) Representative: Jung, Minkyu
(86) International application number: PCT/KR2023/014782
(87) International publication number: WO 2024/228432

(57) **Abstract**

Provided are a computing device and method for assigning a generator to a semiconductor layout and a method of training a neural network. The former method includes an input operation of receiving a layout by a computing device, a division operation of dividing the layout into a plurality of channels, a conversion operation of converting each of the divided channels into a matrix, and an inference operation of inferring a generator to be assigned to the layout from the matrix. The inference operation is performed by displaying one or more generator candidates corresponding to the received layout.

## Description

### [Technical Field]

The present disclosure generally relates to a computing device and method for assigning a generator to a semiconductor layout and a method of training a neural network.

### [Background Art]

An analog integrated circuit, or a mixed-signal integrated circuit that processes both analog signals and digital signals is eventually implemented as a semiconductor device, with its physical layout designed by a designer. According to the related art, a designer designs a circuit by drawing physical layers and then completes the circuit through a process of modifying the layout according to design rules and other processes.

A process of designing a semiconductor circuit through a designer's manual work is gradually transitioning to a generator-based semiconductor circuit layout design method. According to a generator-based layout design method, design parameters are provided by a designer, and a layout which corresponds to the input parameters and meets design rules is automatically generated.

In manual design method, a designer can create only one fixed layout design. In contrast, the generator-based method allows the creation of multiple layouts with different device sizes, architectures, and dimensions in a single coding of the generator script.

Such generator-based layout design is highly effective for designing circuits that are required to operate at a high speed, consume low power and to process large amount of data in high speed.

### [Disclosure]

### [Technical Problem]

When designers convert a semiconductor layout into the its layout generator, they need to assign appropriate pre-existing generators to sub-cell layouts within the received semiconductor layout, ensuring that the assigned generators are capable of generating those specific sub-cells.

However, with the rapid development of semiconductor circuit technologies, semiconductors have hierarchical structures including multiple hierarchy levels, and numerous sub-cells of lower hierarchy levels may be included in a single cell at the uppermost hierarchy level. Accordingly, when assigning a generator to each sub-cell, it is necessary to remember complex names of the sub-cells and also to specify generator library names, class names, parameter names of a function, and the like. When the number of types of sub-cells increases and the number of types of already designed generator libraries increases, the time required for assigning generators sharply increases, leading to consumption of much time and manpower. Consequently, productivity is decreased.

The present invention aims to overcome the difficulties associated with the prior art. Also, the present invention is directed to improving productivity by reducing time and manpower consumed in designing a semiconductor layout.

### [Technical Solution]

According to an aspect of the present invention, there is provided a method of assigning a layout generator to a semiconductor layout by a computing device, the method comprising steps of: receiving the layout; dividing the layout into a plurality of channels; converting each of the divided channels into a matrix; and inferring a generator for generating the layout from the matrix, wherein the inferring is performed by displaying one or more generator candidates corresponding to the received layout.

The method may further comprise, after inferring, assigning a generator to the layout.

The received layout may comprise a plurality of sub-cells of a semiconductor circuit, and the inferring is performed by displaying generator candidates for the plurality of sub-cells included in the received layout.

The received layout includes a plurality of sub-cells of a semiconductor circuit which are specified by a user.

The dividing is performed by dividing each of physical layers included in a layout of the semiconductor circuit into a corresponding channel and grouping the same physical layer included in the semiconductor circuit into the same channel.

The dividing is performed by grouping physical layers that perform the same function in a semiconductor circuit into the same channel.

The inferring is performed using a trained convolutional neural network including a feature extraction block and a fully-connected layer. And the inferring is performed using the trained convolutional neural network that further includes a channel reduction layer.

The inferring is performed by further displaying a probability that the received layout corresponds to the one or more generator candidates.

According to other aspect of the present invention, there is provided a method of training a neural network by a computing device for assigning a generator to a semiconductor layout, the method comprising: a preprocessing that receives the layout and divides the layout into a plurality of channels; a converting each of the divided channels into a matrix; and a training a neural network using the converted matrix, wherein the preprocessing is performed by inputting, to the neural network, at least one layout.

The preprocessing is performed by dividing each of physical layers included in the layout into a corresponding channel, wherein each channel represents a specific physical layer in the semiconductor circuit.

The preprocessing is performed by grouping physical layers that perform the same function in a semiconductor circuit into a same channel.

The neural network is a convolutional neural network including at least one convolutional layer, at least one pooling layer, and at least one fully-connected layer.

According to another aspect of the present invention, there is provided a computing device for assigning a generator to a semiconductor layout, the computing device comprising: at least one processor; and a memory configured to store one or more programs executed by the processor, wherein, when the programs are executed by the at least one processor, a method of assigning a generator to a semiconductor layout is performed by the at least one processor, the method comprising: receiving the semiconductor layout; dividing the semiconductor layout into a plurality of channels; converting each of the divided channels into a matrix; and inferring a generator to be assigned to the layout from the matrix, wherein the inferring is performed by displaying one or more generator candidates corresponding to the received layout.

The inferring is performed by further displaying a probability that the received layout corresponds to the one or more generator candidates.

The received layout comprises a plurality of sub-cells of a semiconductor circuit, and the inferring is performed by displaying generator candidates for the plurality of sub-cells included in the received layout.

The received layout includes a plurality of sub-cells of a semiconductor circuit which are specified by a user.

The dividing is performed by dividing each of physical layers included in a semiconductor circuit into a corresponding channel and grouping the same physical layer included in the semiconductor circuit into the same channel.

The dividing is performed by grouping physical layers that perform the same function in a semiconductor circuit into the same channel.

The inferring is performed using a trained convolutional neural network that includes at least one convolutional layer, at least one pooling layer, and a fully-connected layer.

The inferring is performed using the trained convolutional neural network that further includes a channel reduction layer.

The computing device is trained with method of training a neural network for assigning a generator to a semiconductor layout by the processor, the method of training a neural network comprises steps of: preprocessing that receives the layout and divides the layout into a plurality of channels; converting each of the divided channels into a matrix, training a neural network using the converted matrix, wherein preprocessing is performed by inputting, to the neural network, at least one layout, and wherein training the computing device with method of training a neural network is performed before the method of assigning a generator to a semiconductor layout is performed.

### [Advantageous Effects]

According to present embodiment, the advantage of improving the productivity of semiconductor circuit layout design is provided.

### [Description of Drawings]

FIG. 1 is a flowchart illustrating an overview of a method of assigning a generator to a semiconductor layout according to an exemplary embodiment of the present disclosure;
FIG. 2 is a flowchart illustrating an overview of a method of training a neural network to assign a generator into a semiconductor layout according to an exemplary embodiment of the present disclosure;
FIG. 3 is a block diagram illustrating an overview of a computing device for performing a method of training a neural network to assign a generator to a semiconductor layout and a method of assigning a generator to a semiconductor layout according to an exemplary embodiment of the present disclosure;
FIG. 4 is a layout of a planar metal-oxide semiconductor (MOS) transistor;
FIG. 5 is a diagram illustrating that an active channel (AC), a poly channel (PC), a metal channel (MC), and a contact channel (CC) obtained by dividing the MOS transistor layout shown in FIG. 4;
FIG. 6 is a diagram illustrating a structure of a neural network used in an operation of training a neural network or making an inference using a matrix composed of a plurality of channels, which represents divided physical layers of the received layout;
FIG. 7 is a diagram showing an exemplary layout of a complementary metal-oxide semiconductor (CMOS) inverter;
FIG. 8 is a diagram illustrating a case of receiving an inverter layout and inferring and assigning appropriate generators to sub-cells of the inverter layout;
FIG. 9 is a diagram illustrating an exemplary layout of a RX0 circuit which is designed through a CMOS1 process used in a layout-generator experiment;
FIG. 10 is a layout of a high-speed input/output (I/O) transceiver circuit which is manually designed by a designer through a CMOS2 process different from a CMOS 1 process; and
FIGS. 11A and 11B are example layouts of resistor unit circuits with different aspect ratios, generated by inputting different design parameters into the same generator.

### [Modes of the Invention]

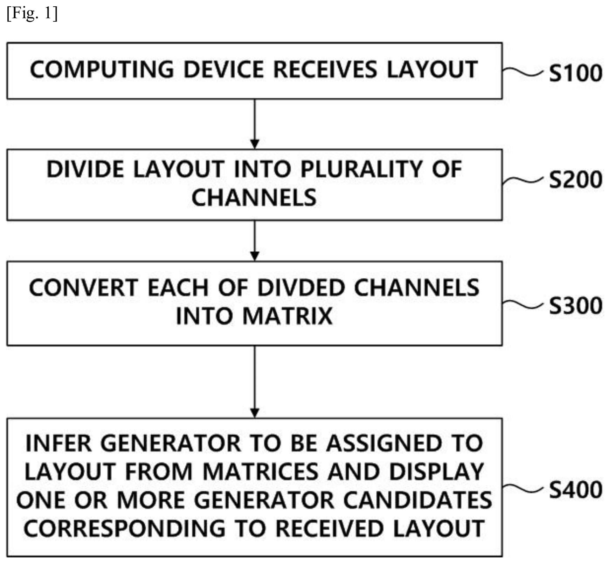

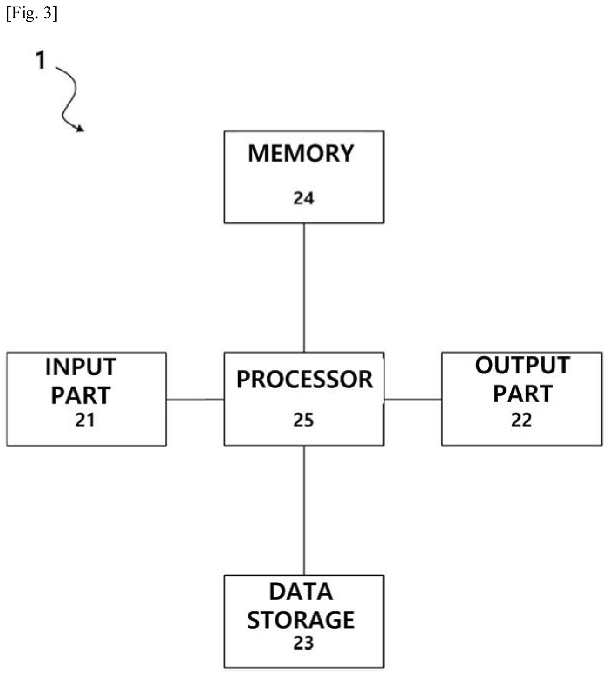

Hereinafter, exemplary embodiments of the present disclosure will be described with reference to the accompanying drawings. FIG. 1 is a flowchart illustrating an overview of a method of assigning a generator to a semiconductor layout according to an exemplary embodiment of the present disclosure. Referring to FIG. 1, the method of assigning a generator to a semiconductor layout according to the exemplary embodiment of the present disclosure includes an input operation S100 of receiving a layout by a computing device 1 (see FIG. 3), a division operation S200 of dividing the layout into a plurality of channels, a conversion operation S300 of converting each of the divided channels into a matrix, and an inference operation S400 of inferring a proper generator for generating the received layout from the matrix. The inference operation S400 is performed by displaying one or more generator candidates corresponding to the received layout.

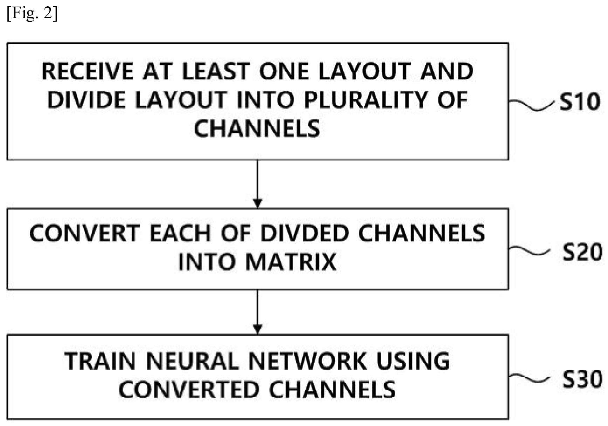

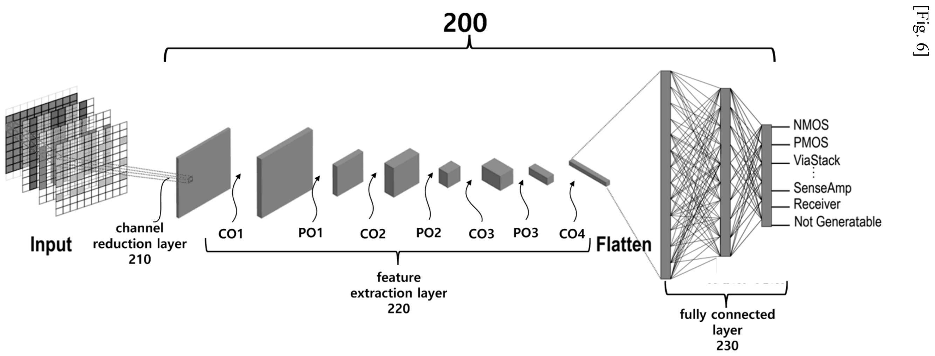

FIG. 2 is a flowchart illustrating an overview of a method of training a neural network 200 (see Fig. 6) to assign a generator into a semiconductor layout according to an exemplary embodiment of the present disclosure. Referring to FIG. 2, the method of training a neural network to assign a generator into a semiconductor layout includes a preprocessing operation S10 of receiving a layout and dividing the layout into a plurality of channels, a conversion operation S20 of converting each of the divided channels into a matrix, and a training operation S30 of training a neural network 200 using the converted matrix. The preprocessing operation S10 is performed by inputting, to the neural network 200, at least one layout. The input at least one layout comprises at least one of a manually designed layout by a designer and one of a generator generated layout by inputting a parameter to the generator.

FIG. 3 is a block diagram illustrating an overview of a computing device 1 for performing a method of training a neural network to assign a generator to a semiconductor layout and a method of assigning a generator to a semiconductor layout according to an exemplary embodiment of the present disclosure. Referring to FIG. 3, the computing device 1 according to this exemplary embodiment may include an input part 21, an output part 22, a processor 25, a memory 24, and a data storage 23. The computing device 1 of FIG. 3 is in accordance with the exemplary embodiment, and all the blocks shown in FIG. 3 are not necessary components. According to other embodiments, some blocks included in the computing device 1 may be added, modified, or removed. Meanwhile, the computing device 1 may be implemented as a computing device for performing a method of training a neural network to assign a generator to a semiconductor layout and a method of assigning a generator to a semiconductor layout. Components included in the computing device 1 may be implemented as separate software devices or separate hardware devices combined with software.

The computing device 1 performs an input operation S100 of receiving a layout, a division operation S200 of dividing the layout into a plurality of channels, a conversion operation S300 of converting each of the divided channels into a matrix, and an inference operation S400 of inferring a generator to be assigned to the layout from the matrices. The inference operation S400 is performed by displaying one or more generator candidates corresponding to the received layout.

Also, the computing device 1 performs a method of training a neural network 200 to assign a generator into a semiconductor layout. The method includes a preprocessing operation S10 of receiving a layout and dividing the layout into a plurality of channels, a conversion operation S20 of converting each of the divided channels into a matrix, and a training operation S30 of training a neural network 200 using the converted matrix. The preprocessing operation S10 is performed by inputting, to the neural network 200, at least one of layouts manually designed by a designer or at least one of layouts generated by inputting a parameter to the generator.

The input part 21 is a component that receives a semiconductor layout for training a neural network 200 or assigning generators to sub-cells. Also, the input part 21 may interoperate with the processor 25 to receive a layout designed by a user or a layout generated by a generator or interoperate with an external device to directly acquire data and then transfer the received layout or the acquired data to the processor 25. The input part 21 may be a device or server for inputting or receiving log information, various condition information, control signals, and the like, but is not limited thereto.

The output part 22 may interoperate with the processor 25 to display the received layout, an inference result, an assigned generator, and information thereon. To output certain information, the output part 22 may output various information through a display (not shown), a speaker, and the like provided in the computing device 1, but is not necessarily limited thereto.

The processor 25 executes at least one instruction or program stored in the memory 24. The processor 25 according to this embodiment computes data for performing each operation on the basis of data acquired from the input part 21 or the data storage 23.

The memory 24 includes at least one instruction or program which is executable by the processor 25. The memory 24 may fetch the instructions on request from the processor 25. The memory 24 may fetch and store an instruction or program stored in the data storage 23 to perform processing. The memory 24 may store values associated with each operation such as a result value, an intermediate value, and the like.

The data storage 23 is a general data structure provided in a storage space(a hard disk drive or a memory)of a computer system using a data storage management program (a database management system (DBMS)). The data storage 23 may perform data retrieval (extraction), deletion, editing, addition, and the like freely. According to an embodiment, the data storage 23 may store instructions which are compiled to perform the method of assigning a generator and the method of training a neural network according to this embodiment through the processor 25.

The data storage 23 according to this embodiment may receive sub-cell generator assignment results from a program executed by the processor 25, store the assignment results, and provide the stored data as necessary.

Also, the data storage 23 according to this embodiment may receive user commands through the input part 21, store the user commands, and provide the stored data as necessary.

Meanwhile, it has been described that the data storage 23 is implemented in the computing device 1, but the present disclosure is not necessarily limited thereto. The data storage 23 may be implemented as a separate data storage.

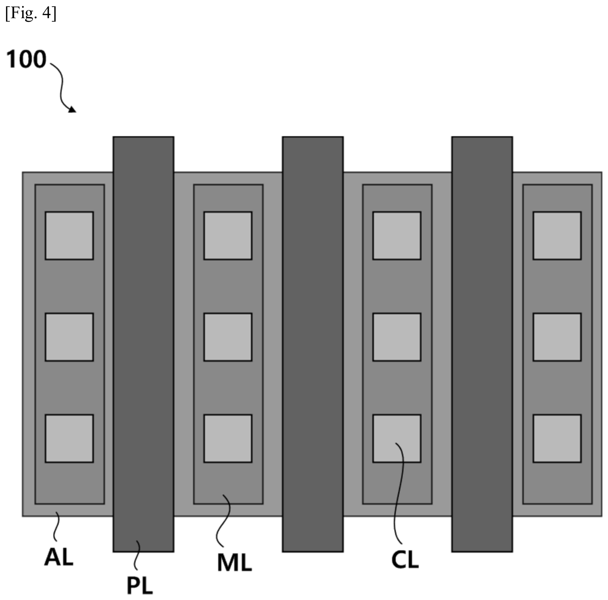

The method of assigning a generator to a semiconductor layout and the method of training a neural network to perform the assignment according to this embodiment will be described below with reference to FIG. 4.

FIG. 4 is a layout 100 of a planar metal-oxide semiconductor (MOS) transistor. The MOS transistor illustrated in FIG. 4 includes elements such as a channel, a gate, a drain, a source, and the like. The layout 100 of the MOS transistor may be displayed as overlaps of an active physical layer AL, a poly physical layer PL, a metal physical layer, ML, and a contact physical layer CL which correspond to the elements.

Referring to FIGS. 1 and 4, in the input operation S100, a computing device receives a layout, in the division operation S200, the received layout by the computing device 1 is divided into a plurality of channels and in the conversion operation S300 of converting each of the divided channels into a matrix. Not only the MOS transistor but also several devices and circuits which have not been described may include many elements which have not been described, and may be implemented as different physical layers which have not been described in addition to the active physical layer AL, the poly physical layer PL, and the like.

Referring to FIGS. 2 and 4, in the preprocessing operation S10, a received layout is divided into a plurality of channels (S10). Not only the MOS transistor but also several devices and circuits which have not been described may include many elements which have not been described, and may be implemented as different physical layers which have not been described in addition to the active physical layer AL, the poly physical layer PL, and the like.

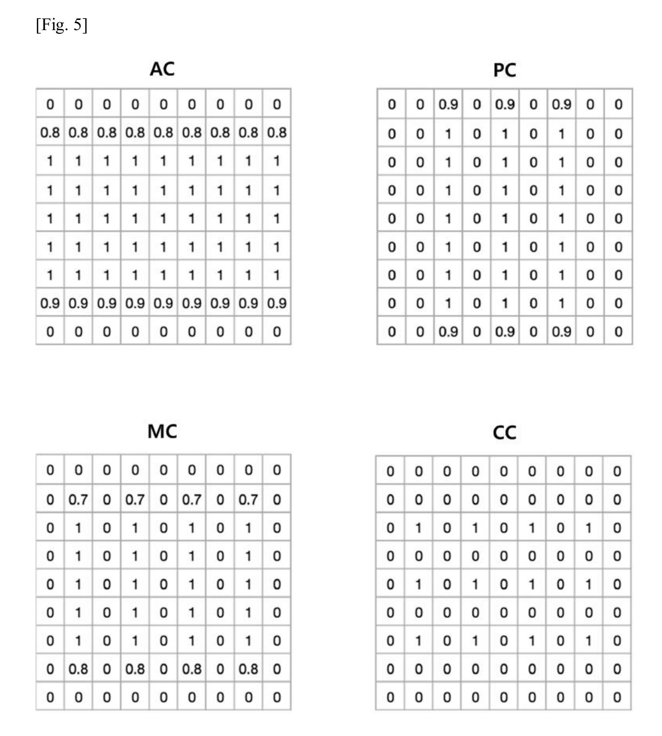

FIG. 5 is a diagram illustrating a plurality of channels obtained by dividing the layout of the MOS transistor layout illustrated in FIG. 4. Referring to FIG. 5, a plurality of physical layers which are included in the layout are divided into different channels. The divided channels are converted into a matrix as illustrated (S300, S20). Each of these channels is represented in the form of a matrix with a plurality of regularly arranged rows and columns. Furthermore, in the channels corresponding to the physical layers included in each element, an appropriate numerical value can be assigned to the matrix element corresponding to the position of the pattern drawn on the respective physical layer;

According to an embodiment, technology to form the gate of a transistor using metal has recently emerged. When a poly physical layer and a metal-gate physical layer are classified as different channels, a neural network 200 may be trained to assign different generators to two transistor layouts which may be generated by the same generator according to this embodiment. However, both a poly physical layer and a metal-gate physical layer perform the same function as a gate in a transistor. Accordingly, physical layers performing the same function are grouped and represented as the same channel to train the neural network 200. Therefore, the neural network 200 may be trained to determine whether layouts including different physical layers performing the same function can be generated by the same generator.

The active physical layer AL, the poly physical layer PL, the metal physical layer, ML, and the contact physical layer CL shown in FIG. 4 are separately displayed as an active channel AC, a poly channel PC, a metal channel MC, and a contact channel CC as illustrated in FIG. 5. Each of these channels is represented in the form of a matrix with a plurality of regularly arranged rows and columns. Also, in a channel corresponding to physical layers included in each element, an appropriate numerical value can be assigned to the matrix element corresponding to the positions of the patterns drawn on the respective physical layer.

According to an embodiment, the provided layout relates to a single transistor, which is designed by a circuit designer in consideration of a maximum current and a maximum enduring voltage to be conducted using the transistor.

According to another embodiment, the layout may be a layout of a device generated by inputting a parameter of the device to a generator. For example, the provided layout may be a layout of a transistor generated by inputting a channel width W, a channel length L, the number of fingers, and the like which are design parameters of the transistor, to a generator. In another example, any combination of values of parameter types required by each generator may be generated by a random parameter generator, and then the provided layout may be generated using the combination of values.

In this way, the neural network 200 may be trained using a layout designed by a designer and layouts which are generated by inputting parameters to a generator. The layout formed according to an embodiment is preprocessed and converted to train the neural network (S30).

Similarly, the neural network 200 may assign a generator to a semiconductor layout by receiving the layout. The received layout formed according to an embodiment is divided and converted for inference operation (S400).

FIG. 6 is a diagram illustrating a structure of a neural network 200 used in the operation of training a neural network (S30) or making an inference (S400) using a matrix composed of a plurality of channels from divided physical layers. A neural network 200 may include a channel reduction layer 210, a feature extraction block 220, and a fully-connected layer 230.

The illustrated embodiment of the neural network 200 includes one channel reduction layer 210 for reducing the number of channels by performing convolution operation using one or more 1×1 kernels, a feature extraction block 220 including four convolution operation layers CO1, CO2, CO3, and CO4 and three pooling layers PO1, PO2, and PO3 disposed between the four convolution operation layers, and two fully-connected layers 230.

The initial convolutional layer reduces the number of channels and a model size using a 1×1 kernel. All the four convolution operation layers CO1, CO2, CO3, and CO4 perform convolution operations using a 3×3 kernel, and the three pooling layers PO1, PO2, and PO3 perform computation using a 2×2 kernel to extract a feature of an input. With the training process, weight values of kernels for performing convolution operations are continuously updated.

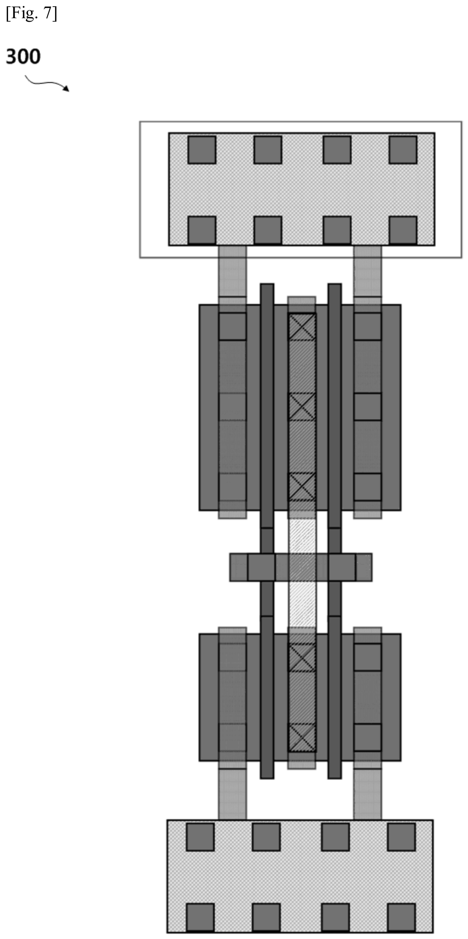

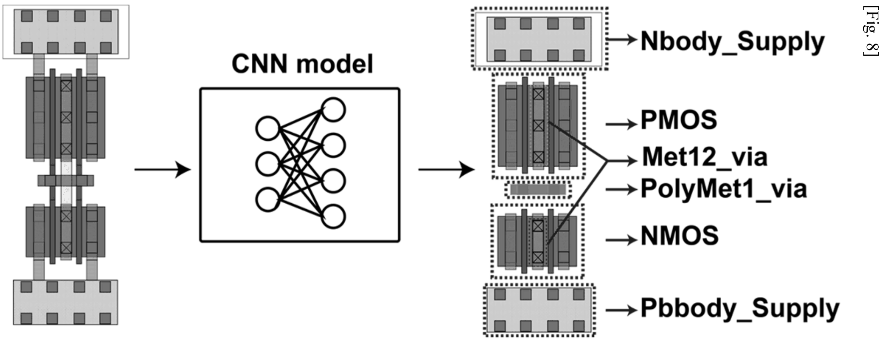

A method of assigning a generator to a layout using the neural network 200 trained through the above process will be described below. FIG. 7 is a diagram showing an exemplary layout of an inverter 300, and FIG. 8 is a diagram illustrating a case of receiving an inverter layout and inferring and assigning appropriate generators to sub-cells of the inverter layout. Referring to FIGS. 1 to 8, the computing device 1 receives a layout of an inverter through the input part 21. The received layout may include a plurality of sub-cells. In the illustrated embodiment, the inverter 300 includes a plurality of MOS transistors which are sub-cells, and a plurality of via stack arrays.

In the illustrated embodiment, a layout of the single inverter 300 is provided to the input part 21 of the computing device 1. However, in another embodiment, a user may select a part of the inverter 300 and provide only the selected part to the input part 21 so that sub-cells included in the selected part may be inputted to the neural network, processed, and assigned to a generator.

The computing device 1 divides the received layout into a plurality of channels (S200). Each of a plurality of physical layers in a layout may be divided into a plurality of channels.

The divided channels are converted into a matrix (S300) and provided to the neural network 200. According to an embodiment, the trained neural network 200 reduces the number of channels of the input and extract a feature. Generator candidates that may be assigned to the received layout on the basis of the extracted feature may be displayed through the output part 22.

FIG. 8 is a diagram illustrating a state in which generators are assigned to sub-cells of a received inverter layout. In the embodiment illustrated in FIG. 8, generators are assigned to a p-channel MOS (PMOS) transistor PMOS, an n-channel MOS (NMOS) transistor NMOS, a via Met12_via between metal 1 and metal 2, a via PolyMet1_via between poly and metal 1, a first supply rail Nbody_Supply, and a second supply rail Pbody_Supply which are sub-cells of the received layout of the inverter 300, and output.

According to an embodiment, the computing device 1 may display possibilities that the sub-cells included in the received layout will correspond to the assigned generator candidates. For example, like (NMOS transistor generator, 89%), (PMOS transistor generator, 7%), and (via stack array generator, 4%), any one sub-cell included in the received layout may be displayed with probabilities that the sub-cell will correspond to assignable generator candidates. A designer may check the displayed probabilities that the sub-cells will correspond to generator candidates and assign generators to the sub-cells included in the layout.

According to another embodiment, the computing device 1 may assign a generator with the highest correspondence possibility among generator candidates to a sub-cell included in the received layout.

### Experimental example

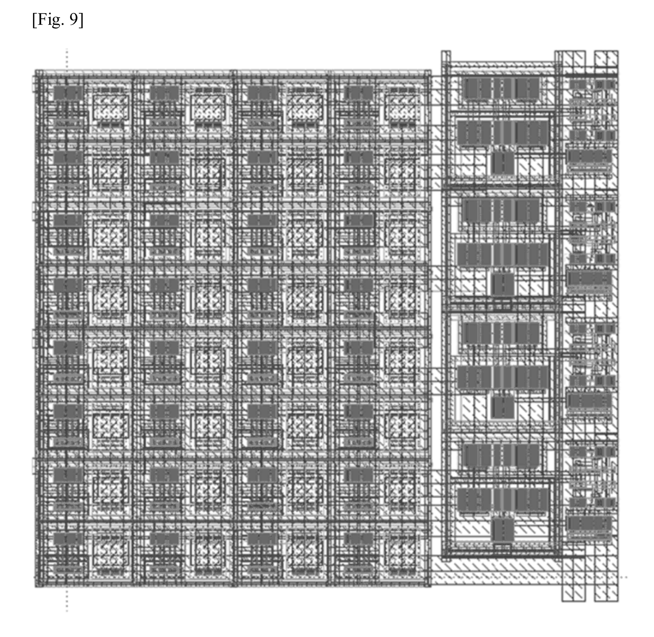

Experiment results of this embodiment will be described below with reference to FIGS. 9, 10, and 11. FIG. 9 is a diagram illustrating an exemplary layout of a RX0 circuit which is used in a layout-generator experiment. The layout of the RX0 circuit illustrated in FIG. 9 was manually designed by a designer through a complementary metal-oxide semiconductor (CMOS) 1 process. Generators to be assigned to a plurality of sub-cells used in the RX0 circuit were stored in a generator library.

Table 1 below shows examples of assignment accuracy.

**[Table 1]**

| **Generator Templates** | **Precision** | **Recall** | **F1-score** | **Support** |
|---|---|---|---|---|
| **Resistor Bank** | **100%** | **100%** | **100%** | **1** |
| **Slicer unit** | **80%** | **100%** | **89%** | **4** |
| **Sense Amplifier** | **100%** | **100%** | **100%** | **1** |
| **SR latch** | **100%** | **100%** | **100%** | **1** |
| **Resistor Bank Unit** | **100%** | **100%** | **100%** | **32** |
| **Inverter** | **100%** | **100%** | **100%** | **1** |
| **PolyResistor Unit** | **100%** | **100%** | **1 00%** | **1** |
| **NMOS** | **100%** | **100%** | **100%** | **21** |
| **PMOS** | **100%** | **100%** | **100%** | **19** |
| **BodyContact Supply** | **100%** | **100%** | **100%** | **5** |
| **ViaStackArray(I-2)** | **100%** | **100%** | **100%** | **233** |
| **ViaStackArray(2-3)** | **100%** | **100%** | **100%** | **166** |
| **ViaStackArray(3-4)** | **100%** | **100%** | **100%** | **131** |
| **ViaStackArray(4-5)** | **100%** | **100%** | **100%** | **68** |
| **ViaStackArray(5-6)** | **100%** | **100%** | **100%** | **33** |
| **ViaStackArray(6-7)** | **100%** | **100%** | **100%** | **34** |
| **ViaStackArray(poly-1)** | **100%** | **100%** | **100%** | **40** |

Assignment accuracy of this embodiment was evaluated using a total of 800 sub-cells including 799 sub-cells and one sub-cell to which no generator is assignable. The method accurately assigned generators to 798 sub-cells and correctly identified the single sub-cell as not having an assignable generator. An error occurred in the assignment of a wrong generator to only one sub-cell.

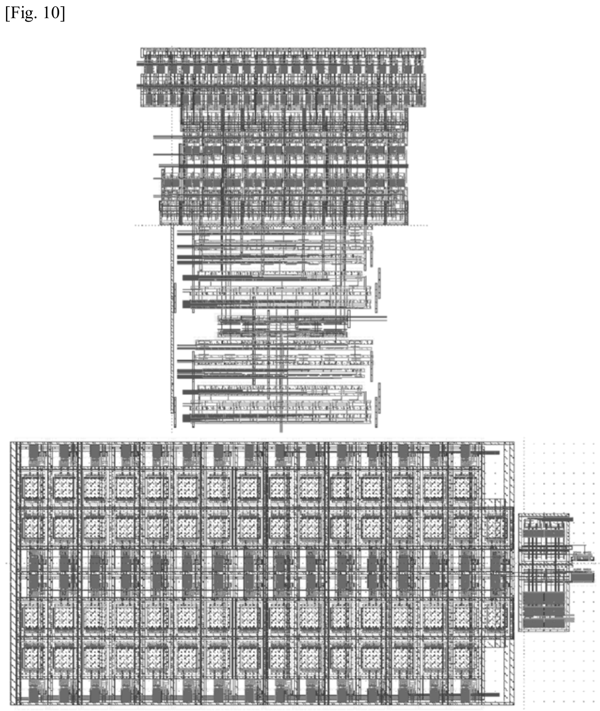

FIG. 10 is a layout of a high-speed input/output (I/O) transceiver circuit which is manually designed by a designer through a CMOS2 process different from a CMOS 1 process. A neural network used in this embodiment was trained using layouts designed through a CMOS1 process. The circuit illustrated in FIG. 10 includes a total of 5,214 sub-cells including 284 sub-cells to which no generator is assignable. Table 2 below shows examples of assignment accuracy of the circuit illustrated in FIG. 10.

**[Table 2]**

| **TRX1** | **True** | **False** |
|---|---|---|
| **Positive** | **4,947** | **23** |
| **Negative** | **261** | **10** |

This embodiment proposed accurate generator assignment for 4,947 sub-cells (positive true). Also, this embodiment correctly identified 261 sub-cells including duty-cycle correction (DCC) circuits, preamplifiers, switches, delay units, and other circuits to which no generator is assignable.

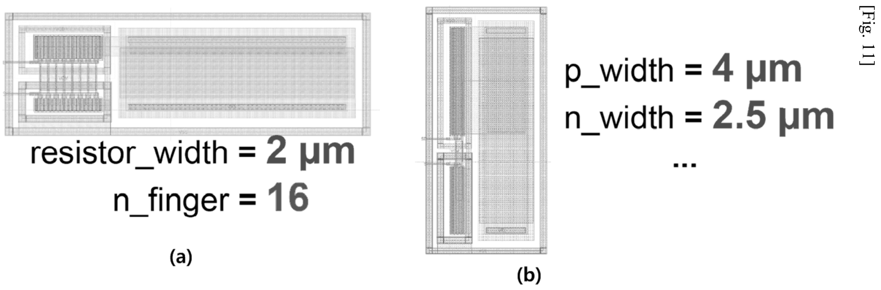

FIGS. 11A and 11B are example layouts of resistor units generated with different aspect ratios by inputting different design parameters to the same layout generator of resistor unit. As illustrated in FIGS. 11A and 11B, resistor units with an extreme aspect ratio are not included in a training dataset, and thus training was not performed using layouts with such extreme aspect ratios in this embodiment. However, in this embodiment, resistor unit layouts illustrated in FIGS. 11A and 11B were recognized as the same type of layouts, and a generator for generating these layouts was accurately assigned. In other words, according to this embodiment, it was possible to correctly recognize and assign an appropriate generator to layouts that were not included in the training dataset.

According to exemplary embodiments of the present invention, it is possible to increase productivity in designing a layout of a semiconductor circuit and developing its layout generator.

Although exemplary embodiments of the present invention have been described with reference to embodiments shown in the drawings to help understanding of the present invention, these are merely illustrative. Those of ordinary skill in the art should understand that various modifications and equivalent embodiments can be made from the exemplary embodiments. Therefore, the technical scope of the present invention should be determined from the following claims.

## Claims

1. A method of assigning a generator to a semiconductor layout by a computing device, the method comprising:
an input operation of receiving the layout by the computing device;
a division operation of dividing the layout into a plurality of channels;
a conversion operation of converting each of the divided channels into a matrix; and
an inference operation of inferring a generator for generating the layout from the matrices,
wherein the inference operation is performed by displaying one or more generator candidates corresponding to the received layout.

2. The method of claim 1, further comprising, after the inference operation, an assignment operation of assigning a generator to the layout.

3. The method of claim 1, wherein the received layout is a layout including a plurality of sub-cells included in a semiconductor circuit, and
the inference operation is performed by displaying generator candidates for the plurality of sub-cells included in the received layout.

4. The method of claim 1, wherein the layout received by the computing device is a layout of a plurality of sub-cells which are included in a semiconductor circuit and specified by a user.

5. The method of claim 1, wherein the division operation is performed by dividing each of physical layers included in a semiconductor circuit into a corresponding channel and dividing the same physical layer included in the semiconductor circuit as the same channel.

6. The method of claim 1, wherein the division operation is performed by dividing physical layers performing the same function in a semiconductor circuit as the same channel.

7. The method of claim 1, wherein the inference operation is performed using a trained convolutional neural network including a feature extraction layer and a fully-connected layer.

8. The method of claim 7, wherein the inference operation is performed using the trained convolutional neural network further including a channel reduction layer.

9. The method of claim 2, wherein the assignment operation is performed by further displaying a possibility that the received layout will correspond to the one or more generator candidates.

10. A method of training a computing device for assigning a generator to a semiconductor layout, the method comprising:
a preprocessing operation of receiving the layout and dividing the layout into a plurality of channels;
a conversion operation of converting each of the divided channels into a matrix; and
a training operation of training a neural network using the converted channels,
wherein the preprocessing operation is performed by inputting, to the neural network, at least one layout manually designed by a designer and at least one of one or more layouts formed by inputting a parameter to the generator.

11. The method of claim 10, wherein the preprocessing operation is performed by dividing each of physical layers included in a semiconductor circuit as a corresponding channel and dividing the same physical layer included in the semiconductor circuit as the same channel.

12. The method of claim 10, wherein the preprocessing operation is performed by dividing physical layers performing the same function in a semiconductor circuit as the same channel.

13. The method of claim 10, wherein the neural network is a convolutional neural network including at least one convolution layer, at least one pooling layer, and at least one fully-connected layer.

14. A computing device for assigning a generator to a semiconductor layout, the computing device comprising:
at least one processor; and
a memory configured to store one or more programs executed by the processor,
wherein, when the programs are executed by the at least one processor, a method of assigning a generator to a semiconductor layout is performed by the at least one processor, the method comprising:
an input operation of receiving the semiconductor layout;
a division operation of dividing the semiconductor layout into a plurality of channels;
a conversion operation of converting each of the divided channels into a matrix; and
an inference operation of inferring a generator to be assigned to the layout from the matrices,
wherein the inference operation is performed by displaying one or more generator candidates corresponding to the received layout.

15. The computing device of claim 14, wherein the inference operation is performed by further displaying a possibility that the received layout will correspond to the one or more generator candidates.

16. The computing device of claim 14, wherein the layout received by a terminal is a layout of a plurality of sub-cells included in a semiconductor chip, and
the inference operation is performed by displaying generator candidates for the plurality of sub-cells included in the received layout.

17. The computing device of claim 14, wherein the layout received by a terminal is a layout of a plurality of sub-cells which are included in a semiconductor circuit and specified by a user.

18. The computing device of claim 14, wherein the division operation is performed by dividing each of physical layers included in a semiconductor circuit as a corresponding channel and dividing the same physical layer included in the semiconductor circuit as the same channel.

19. The computing device of claim 14, wherein the division operation is performed by dividing physical layers performing the same function in a semiconductor circuit as the same channel.

20. The computing device of claim 14, wherein the inference operation is performed using a trained convolutional neural network including at least one convolution operation layer, at least one pooling layer, and a fully-connected layer.

21. The computing device of claim 14, wherein, before the method of assigning a generator to a semiconductor layout is performed, a method of training a computing device for assigning a generator to a semiconductor layout is further performed by the processor, the method of training a computing device comprising:
a preprocessing operation of receiving the layout and dividing the layout into a plurality of channels; and
a conversion operation of converting each of the divided channels into a matrix, and
the input operation is performed by inputting, to a neural network, at least one layout manually designed by a designer and at least one of one or more layouts formed by inputting a parameter to the generator.
